# EUROPÄISCHE PATENTSCHRIFT

(11) **EP 1 996 025 B1**
(45) Veröffentlichungstag und Bekanntmachung des Hinweises auf die Patenterteilung: **23.08.2017**
(21) Anmeldenummer: 07727007.2
(22) Anmeldetag: 16.03.2007
(51) Int. Cl.: A21C 3/08, A21C 11/00

(54) **BIEGE- UND SCHLINGMASCHINE FÜR TEIGSTÜCKE**
BENDING AND KNOTTING MACHINE FOR PIECES OF DOUGH
MACHINE À COURBER ET À ENROULER DES MORCEAUX DE PÂTE

(30) Priorität: 16.03.2006 EP 06111280
(43) Veröffentlichungstag der Anmeldung: 03.12.2008
(73) Patentinhaber: Fritsch GmbH, 97348 Markt Einersheim (DE)
(72) Erfinder: BERNHARDT, Udo, 97346 Iphofen (DE)
(74) Vertreter: Götz, Georg Alois
(86) Internationale Anmeldenummer: PCT/EP2007/052528
(87) Internationale Veröffentlichungsnummer: WO 2007/104801

(56) Entgegenhaltungen:
- EP-A- 0 914 769
- EP-A1- 0 294 251
- EP-A1- 0 673 766
- EP-A1- 0 791 292
- EP-B1- 0 938 844
- EP-B1- 1 255 441
- WO-A-02/24555
- WO-A-96/23415
- WO-A2-2005/065458
- DE-C1- 4 105 254
- DE-U1- 9 004 208
- FR-A1- 2 678 484

## Beschreibung

Die Erfindung betrifft eine Vorrichtung zur maschinellen Herstellung oder Bearbeitung von gebogenen und/oder geschlungenen Teigstücken, die insbesondere Brezelform besitzen, aber auch andere Biege- und/oder Schlingformen aufweisen können, wie z. B. Zopfform. Eine derartige Vorrichtung ist aus WO 02/24555A bekannt, welches Dokument in Zusammenhang alle Merkmale des Oberbegriffs des Anspruchs 1 offenbart. Diese Vorrichtung bzw. Maschine ist mit mindestens einer Funktionskomponente versehen, welche ein Werkzeug zur Teigbearbeitung umfasst, das an die spezifische Biege- und/oder Schlingform des jeweils herzustellenden Teigstücks geometrisch und/oder konstruktiv angepasst ist. Die geometrisch-konstruktive Anpassung gilt insbesondere für die Größenabmessungen des Teigstücks, beispielsweise des Brezel-Teiglings mit seinem Bauchabschnitt, der über einen Knoten in Ärmchenabschnitte übergeht.

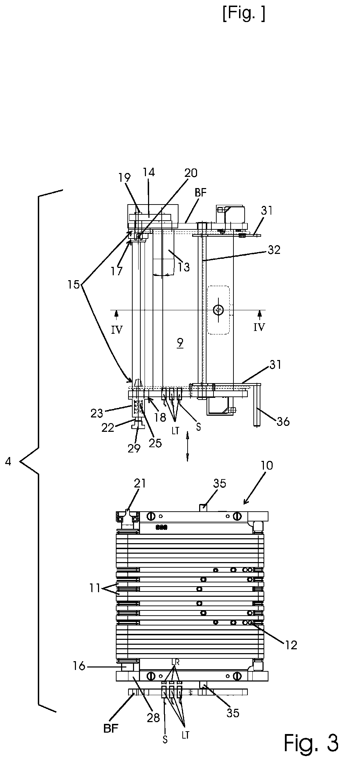

Herstellungs- und Bearbeitungsvorrichtungen zum Biegen und/oder Schlingen von Teigstücken sind insbesondere als Brezelschlingmaschinen oder -anlagen bekannt. So ist in EP-B-0 938 844 eine maschinelle Brezelherstellungsanordung offenbart, die eine Vorformstation zur Herstellung U-förmiger Teigstränge (vgl. dortige Figur 3 mit Bezugsziffer 16), eine Richtstation mit Richtrad, Formeinheiten auf Drehgestellen und eine Abführeinrichtung umfasst. Beispielsweise die Vorformstation und die Richteinheit müssen mit Werkzeugen ausgestattet sein, die an den speziellen Biegeradius des jeweiligen, herzustellenden Teigstücks angepasst sind. Gemäß EP-B-1 255 441 wird ein U-förmig gebogener Teigstrang mittels Förderbänder über einen Formtisch bewegt. Dieser ist mit parallelen, beabstandeten Förderbändern versehen, durch welchen entsprechend der jeweils gewünschten Brezelbauchform angeordnete Haltestifte ragen, um einen Anschlag für den anliegenden, gebogenen Teigstrang zwecks dessen Dehnung und Verschlingung zu bilden. In WO-A-2005/065 458 sind eine Vorrichtung und ein Verfahren zur maschinellen Herstellung von geschlungenen Teigwaren, insbesondere Brezeln beschrieben. Die entsprechende Teigstrang-Verarbeitungslinie umfasst eine Zuführeinrichtung mit hintereinander angeordneten Vorbiege- und Ausrichtstationen, worauf ein Formtisch mit Förderriemen und durchragenden Stiften und eine damit zusammenwirkende Schlingvorrichtung insbesondere mit Drehantrieb und Schlingkopf folgen. Sowohl das Biegewerkzeug der Vorbiegestation als auch das Ausrichtrad der Ausrichtstation als auch die Halte- und Anschlagstifte als auch die Greiferabstände des Schlingkopfes müssen entsprechend der speziellen Geometrie der individuellen Brezelform bemessen, geometrisch gestaltet und konstruktiv ausgerichtet sein. Die WO 02/24 555 A zeigt eine Bearbeitungsmaschine für Lebensmittelprodukte, insbesondere auch Teigwaren, die austauschbare Funktionsmodule zur Produktion unterschiedlicher Lebensmittelprodukte aufweist. Diese Produktionsmaschinen weisen einen Rahmen auf, der ein automatisches Identifizierungssystem für die Funktionsmodule aufweist, welches die Position eines speziellen Funktionsmoduls beim Einbau in den Rahmen automatisch an eine Steuerung weitergibt.

Der Erfindung liegt die Aufgabe zugrunde, bei Teigstück-Biege- und Schlingmaschinen, insbesondere wie aus den oben genannten Fundstellen bekannt, die Flexibilität und Variationsbreite in der Formgebung zu erhöhen, ohne dabei den Grundaufbau konstruktiv und/oder zeitaufwendig verändern zu müssen. Zur Lösung wird auf die im Anspruch 1 angegebene Vorrichtung verwiesen, die sich insbesondere dadurch auszeichnet, dass die Funktionskomponente mit einem Grundgestell versehen oder verbunden ist, das über lösbare Eingriffsverbindungen zur Aufnahme des Werkzeugs der Funktionskomponente ausgebildet ist, welches Werkzeug durch die lösbare Eingriffsverbindung je nach spezifischer Biege- oder Schlingform des herzustellenden Teigstücks auswechselbar ist. Vorteilhafte, optionale Ausgestaltungen der Erfindung ergeben sich aus den abhängigen Ansprüchen.

Mit der Erfindung lässt sich der Vorteil erzielen, dass für jede Funktionskomponente eine Mehrzahl von unterschiedlich bemessenen und/oder gestalteten Wechsel-Werkzeugmodulen bereitgestellt werden kann, welche je nach Anforderung an die individuellen Biege- oder Schlingformen des herzustellenden Brezelstücks untereinander leicht austauschbar sind. In diesem Zusammenhang besteht eine vorteilhafte Erfindungsausbildung darin, die lösbare Eingriffsverbindung zwischen Grundgestell und Wechsel-Werkzeugmodul so auszubilden, dass sie per manueller Handhabung lösbar ist. Dadurch wird der erfindungsgemäße Vorteil, über schnelle Umstellungen mit geringem Aufwand eine Mehrzahl unterschiedlich geformter kundenspezifischer Teigstückformen herstellen zu können, weiter gefördert.

In der Regel sind die ein oder mehreren Funktionskomponenten von Teigbe- und - verarbeitungslinien für gebogene und geschlungene Teigstücke jeweils mit einer oder mehreren Antriebseinheiten versehen, um das jeweilige, auf das Teigstück einwirkende Werkzeug zu bewegen. Auf der Basis der Erfindung ist es ermöglicht, über die lösbare Eingriffsverbindung ein eingesetztes Werkzeug durch ein gleichartiges, aber mit unterschiedlichen Abmessungen und Dimensionen versehenes Werkzeug auszutauschen bzw. zu ersetzen. Wird es dabei versäumt, entsprechende Werkzeugwechsel bei vorgelagerten oder nachfolgenden Stationen der Teigbearbeitungslinie auch vorzunehmen, ergibt sich die Gefahr von Kollisionen von nicht für die gleiche Teigstück-Form dimensionierten Werkzeugen unterschiedlicher, insbesondere aufeinander folgender Funktionskomponenten der Teigbearbeitungslinie. Um in dieser Hinsicht die technische Sicherheit insbesondere bei der Handhabung und Umrüstung der erfindungsgemäßen Vorrichtung zu erhöhen, wird gemäß einer vorteilhaften Ausgestaltung vorgeschlagen, dass das jeweilige Werkzeug mit einem Informationsträger für maschinenlesbare Informationen versehen ist, der einer am Grundgestell angebrachten, vorzugsweise automatisierten Leseeinheit zugeordnet ist. Deren Ausgang für gelesene Informationen ist an die Eingangsschnittstelle einer Steuerung angeschlossen, die insbesondere auf der Basis eines Rechners mit entsprechender Steuerungs- und Überwachungssoftware realisiert ist. Die Muster, Daten und Signale auf dem Informationsträger sind zweckmäßig so strukturiert, dass Informationen vor allem zur Werkzeug-Identifikation, beispielsweise aber zur zugehörigen Teigstück-Spezifikation und/oder zum Herstellungsablauf enthalten sind. Die Informationen liegen beispielsweise in Form von Barcodes oder sonstigen Codierungsmustern vor.

Meist sind bei einer Teig-Verarbeitungslinie zum Biegen und Schlingen von Teigstücken mehrere zusammenwirkende Funktionskomponenten vorgesehen, die je eine oder mehrere Antriebseinheiten aufweisen. Diese sind zweckmäßig durch eine Kopplung mit der genannten Steuerung miteinander koordinierbar. Im Rahmen einer Erfindungsausbildung besitzt die Steuerung eine Überwachungs- und Vergleichseinrichtung, die zur Verarbeitung der von den Werkzeugen per jeweiliger Leseeinheit erhaltenen Informationen ausgebildet ist. In Weiterführung dieses Gedankens ist beispielsweise die Vergleichseinrichtung programm- und/oder schaltungstechnisch zur Erzeugung und Ausgabe von Stellbefehlen an die Antriebseinheiten und/oder Fehlermeldungen eingerichtet, wobei die Stellbefehle und/ oder Fehlermeldungen abhängig vom jeweils erzielten Vergleichsergebnis generiert werden. Mit der genannten Vergleichseinrichtung lässt sich prüfen, ob die Verwendung des Werkzeugs einer ersten Funktionskomponente bei laufendem Betrieb mit einem anderen Werkzeug der selben oder einer zweiten Funktionskomponente zu einer Kollision und Beschädigung der beiden Werkzeuge führt, oder ob ein funktionsgerechtes Zusammenwirken der Werkzeuge gewährleistet ist. Dies lässt sich in der Steuerung mittels geeigneter Software realisieren.

Nach einer Erfindungsausbildung ist die Leseeinheit mit an sich bekannten Näherungsschaltern realisiert, die auf der Basis induktiver, kapazitiver, magnetischer, optischer Techniken oder über Lichtschranken, Ultraschall oder Elektromagnetismus realisiert sein können, wobei sich bei letzteren bei Annäherung eines abzutastenden Objekts die Schwingfrequenz von Schwingkreisen änderten. Eine kostengünstige Variante besteht in der Verwendung induktiver Näherungsschalter, die auf Annäherung metallischer Gegenstände reagieren. Dies wird im Rahmen einer Erfindungsausbildung aufgegriffen, wonach der Informationsträger am Werkzeug als eine entsprechend dem zu übermittelnden Informationscode gestaltete Metallstruktur oder -topografie ausgebildet ist. Die vom jeweiligen Werkzeug entsprechend einem Codierungsmuster vorspringenden Metallstifte ergeben eine aussagekräftige Belegung der Näherungsschalter (geöffnet oder geschlossen). Der so erfasste, informative Binärcode lässt sich von den Näherungsschaltern über geeignete Schnittstellen an die Steuerung zur Weiterverarbeitung, Identifikation und Vergleich weitergeben.

Bei optischen bzw. optoelektronischen Näherungsschaltern (Lichtschranken) wird ein Lichtstrahl zum Wechsel-Werkzeugmodul ausgesandt, an dem Reflektormittel mit bestimmten Kodierungsmustern entsprechend einem Informationsgehalt montiert sind (Prinzip der Reflektionslichtschranke). Das reflektierte Licht wird direkt vom Empfänger aufgenommen oder direkt zu einem Empfänger, jeweils im Rahmen der erfindungsgemäßen Leseeinheit, geschickt. In beiden Fällen wird in der Leseeinheit ein Signal generiert, wenn Reflektionsmittel vom Lichtstrahl beaufschlagt werden. Bei an sich bekannten Lichttastern lässt sich die Leseeinheit mit einem einheitlichen Gehäuse realisieren, worin Licht-Sender und -Empfänger gemeinsam beherbergt sind. Der Lichttaster reagiert auf das von den Reflektionsmitteln auf dem jeweiligen Wechsel-Werkzeugmodul reflektierte Licht beispielsweise mit der Ausgabe eines binären Schaltsignals. Mit dem Einsatz von Näherungsschaltern auf der Basis optoelektronischer Sensoren wird der Vorteil einer großen Reichweite erzielt.

Der mit Näherungsschaltern erzielte Vorteil besteht in der berührungslosen Abfrage, die sich auch über an sich bekannte Funk-Erkennung (Radio Frequency Identification - RFID) realisieren lässt. Die entsprechende Erfindungsausbildung besteht darin, dass die Leseeinheit am Grundgestell zum Scannen an sich bekannter Transponder (Funketiketten) ausgebildet ist, welche die am Werkzeug angebrachten Informationsträger bilden.

Es liegt im Rahmen der Erfindung, die Antriebseinheiten der Funktionskomponenten am (jeweiligen) Grundrahmen fest und dauerhaft zu installieren, so dass diese bei Werkzeugwechsel stets im Grundrahmen verbleiben. Bei Einsatz eines Werkzeugs in den Grundrahmen und nach Identifikation des eingesetzten Werkzeugs über die Leseeinheit durch die Steuerung lassen sich für das individuelle, herzustellende Teigstück spezifische Stellbefehle in die Antriebseinheit einspeisen. Anhand der Werkzeugidentifikation lässt sich nämlich erkennen, welche kundenspezifische Teigstück-Form hergestellt werden soll. Sind andere Funktionseinheiten jedoch nicht mit für das jeweilige Teigstück passenden Vorteile auf der Basis der Erfindung ergeben sich aus der nachfolgenden Beschreibung beispielhafter Ausführungsformen der Erfindung und aus den Zeichnungen. Diese zeigen in:
Figur 1 ein steuerungstechnisches Blockschema eines erfindungsgemäßen Werkzeugwechselsystems für eine Teigbearbeitungsvorrichtung mit einer Mehrzahl von Funktionskomponenten jeweils mit einem oder mehreren Antriebseinheiten,
Figur 2 in schematischer Seitenansicht eine gerätetechnische Übersicht einer Teigbearbeitungslinie mit mehreren Bearbeitungsstationen bzw. Funktionskomponenten zum Einsatz der Erfindung,
Figur 3 jeweils in der Draufsicht das Grundgestell und die davon herausgenommene bzw. demontierte Wechselformeinheit eines erfindungsgemäßen, beispielhaften Teigstrang-Fomtisches,
Figur 4 einen Seitenschnitt etwa gemäß Linie IV-IV in Figur 3 mit Grundgestell und demontierter Wechselforneinheit,
Figur 5 eine Vorderansicht auf den Teigstrang-Formtisch im demontierten Zustand mit herausgenommener Wechselformeinheit,
Figur 6 die Einzelheit X in Figur 5 in vergrößerter Darstellung,
Figur 7 die Einzelheit Z in Figur 5 in vergrößerter Darstellung,
Figuren 8-10 den Figuren 3-5 entsprechende Ansichten des Teigstrang-Formtisches mit darin eingesetzter beziehungsweise montierter Wechselformeinheit,
Figur 11 eine Ansicht auf das erfindungsgemäße Teigstrang-Schlingwerk mit Antriebseinheit und Wechselschlingwerkzeug,
Figur 11a das Wechselschlingwerkzeug in einer teilweise quergeschnittenen Draufsicht,
Figur 12 im ausschnittsweisen Längsschnitt eine Darstellung der Kopplung der Antriebseinheit mit dem Wechsel-Schlingwerkzeug,
Figur 13 den in Figur 12 strichpunktiert umrundeten Bereich in vergrößerter Darstellung,
Figur 14 eine querschnittliche Ansicht gemäß Line XIV-XIV in Figur 12,
Figur 15 eine querschnittliche Ansicht gemäß Linie XV-XV in Figur 12,
Figur 16 in schematischer Seitenansicht die Vorbiegestation in Betriebsstellung zum Biegen unter Zuhilfenahme der Schwerkraft, und Förderband,
Figur 17 in gleicher Ansicht die Vorbiegestation in Abstreifstellung,
Figur 18 in gleicher Ansicht die Vorbiegestation in Abstreifstellung mit hochgehobener Schwenkhaltehaube,

Vorteile auf der Basis der Erfindung ergeben sich aus der nachfolgenden Beschreibung beispielhafter Ausführungsformen der Erfindung und aus den Zeichnungen. Diese zeigen in:

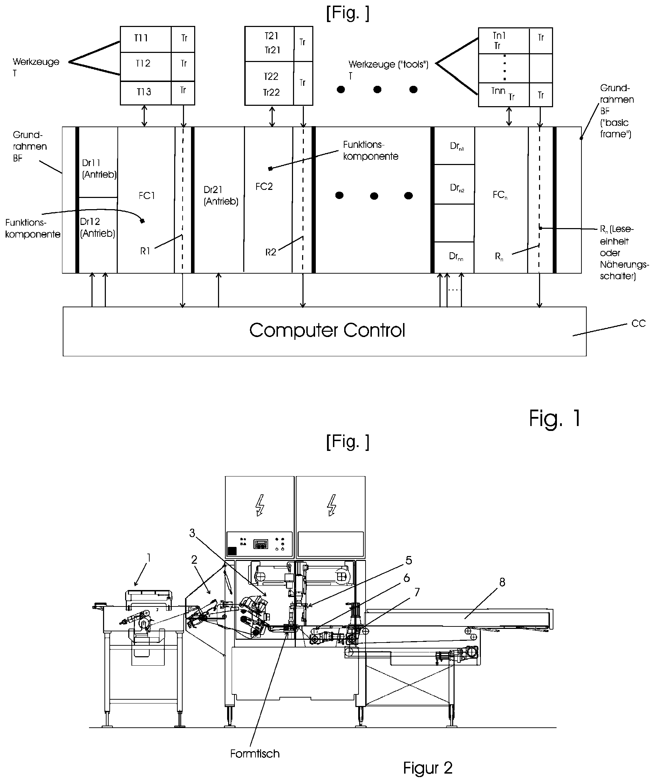

Figur 1 ein steuerungstechnisches Blockschema eines erfindungsgemäßen Werkzeugwechselsystems für eine Teigbearbeitungsvorrichtung mit einer Mehrzahl von Funktionskomponenten jeweils mit einem oder mehreren Antriebseinheiten,
Figur 2 in schematischer Seitenansicht eine gerätetechnische Übersicht einer Teigbearbeitungslinie mit mehreren Bearbeitungsstationen bzw. Funktionskomponenten zum Einsatz der Erfindung,
Figur 3 jeweils in der Draufsicht das Grundgestell und die davon herausgenommene bzw. demontierte Wechselformeinheit eines erfindungsgemäßen, beispielhaften Teigstrang-Formtisches,

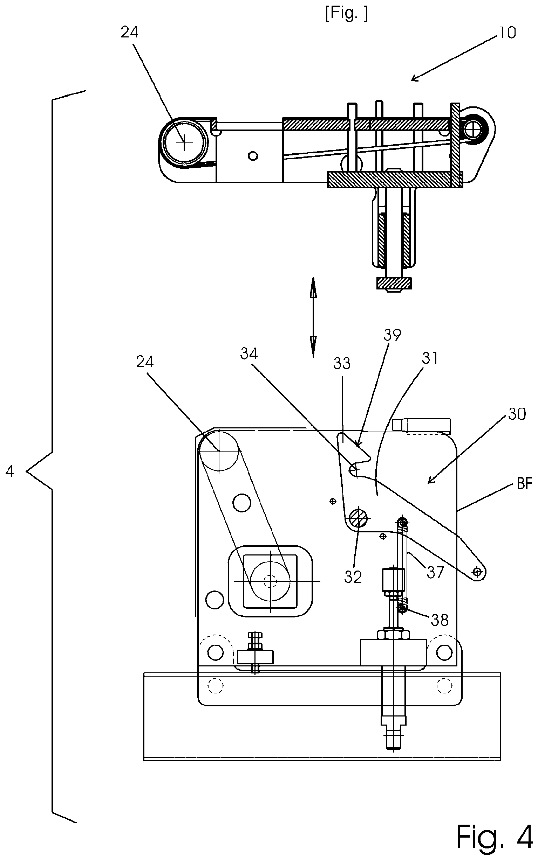

Figur 4 einen Seitenschnitt etwa gemäß Linie IV-V in Figur 3 mit Grundgestell und demontierter Wechselformeinheit,

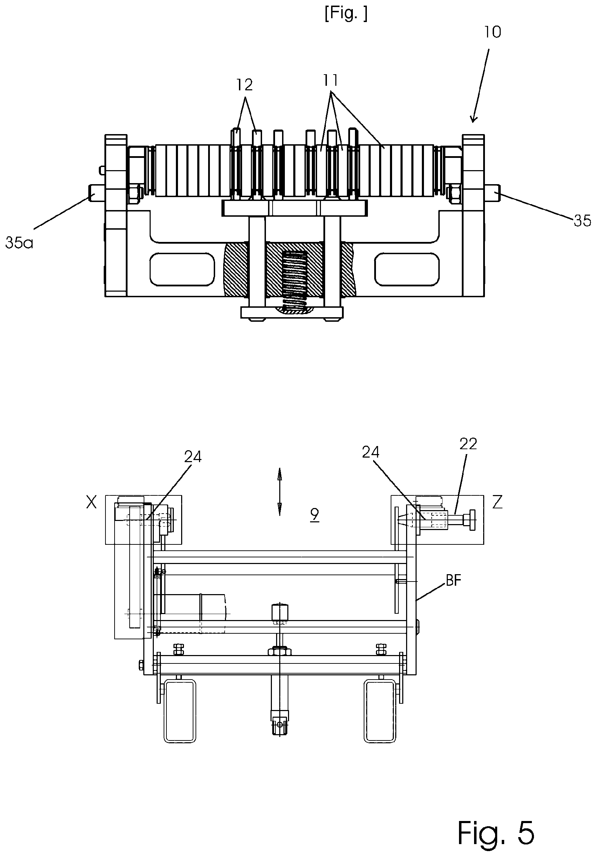

Figur 5 eine Vorderansicht auf den Teigstrang-Formtisch im demontierten Zustand mit herausgenommener Wechselformeinheit,

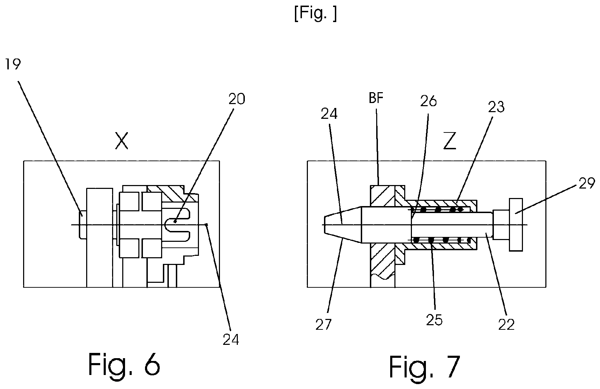

Figur 6 die Einzelheit X in Figur 5 in vergrößerter Darstellung,
Figur 7 die Einzelheit Z in Figur 5 in vergrößerter Darstellung,

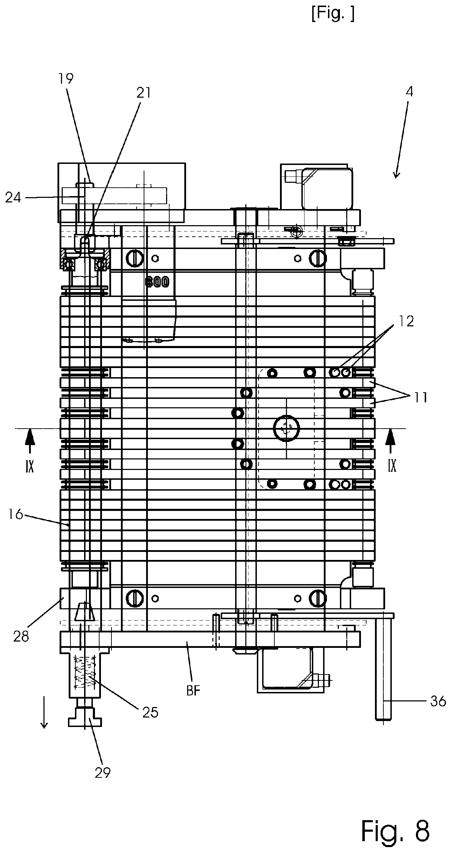

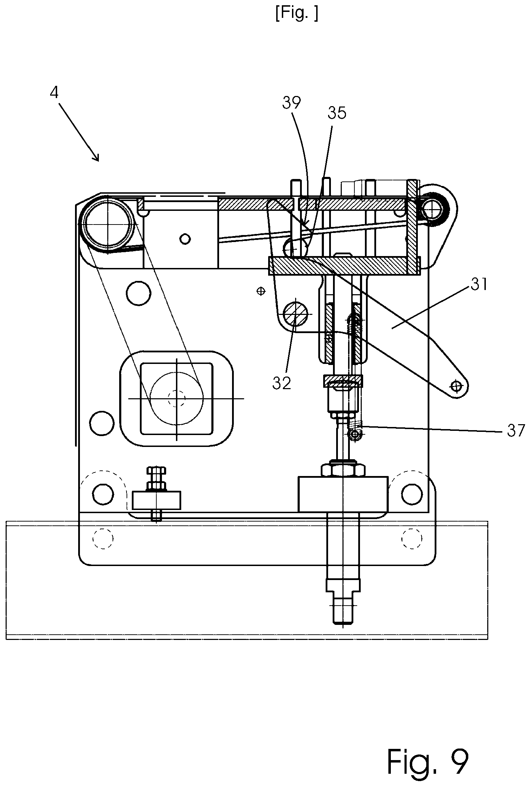

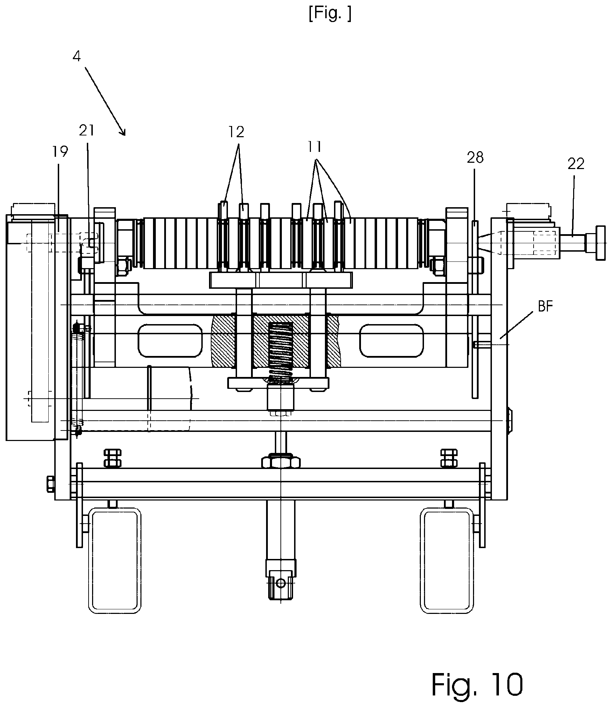

Figuren 8-10 den Figuren 3-5 entsprechende Ansichten des Teigstrang-Formtisches mit darin eingesetzter beziehungsweise montierter Wechselformeinheit,

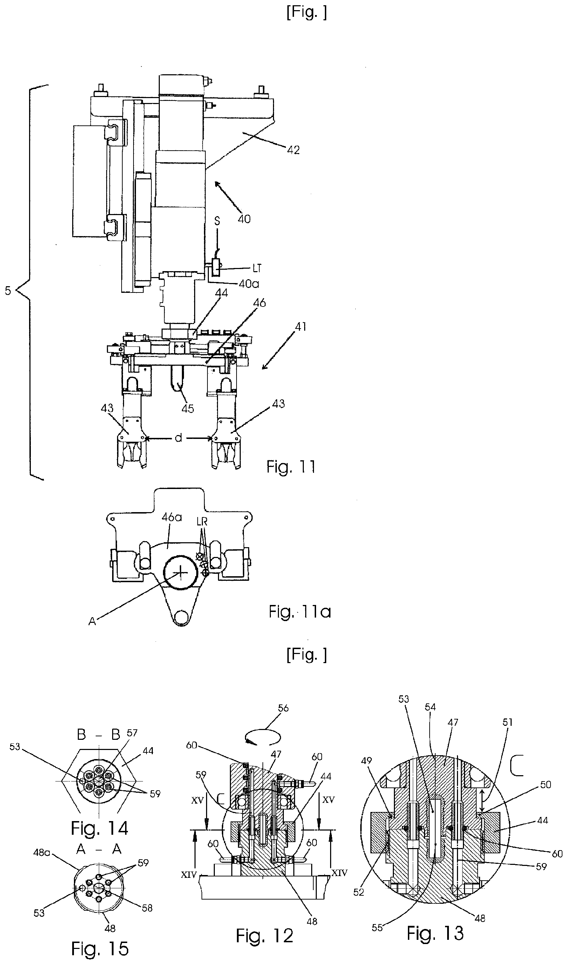

Figur 11 eine Ansicht auf das erfindungsgemäße Teigstrang-Schlingwerk mit Antriebseinheit und Wechselschlingwerkzeug,
Figur 11a das Wechselschlingwerkzeug in einer teilweise quergeschnittenen Draufsicht,
Figur 12 im ausschnittsweisen Längsschnitt eine Darstellung der Kopplung der Antriebseinheit mit dem Wechsel-Schlingwerkzeug,
Figur 13 den in Figur 12 strichpunktiert umrundeten Bereich in vergrößerter Darstellung,
Figur 14 eine querschnittliche Ansicht gemäß Line XIV-XIV in Figur 12,
Figur 15 eine querschnittliche Ansicht gemäß Linie XV-XV in Figur 12,

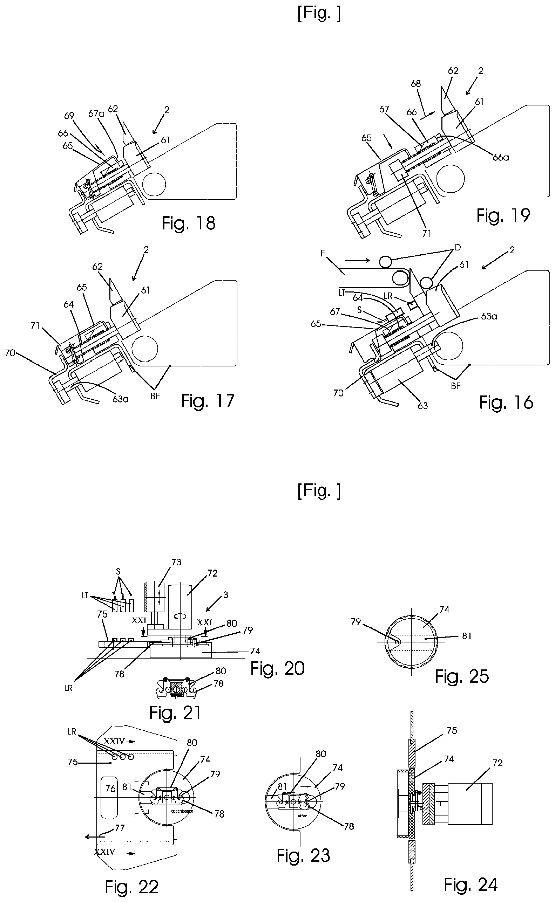

Figur 16 in schematischer Seitenansicht die Vorbiegestation in Betriebsstellung zum Biegen unter Zuhilfenahme der Schwerkraft,
Figur 17 in gleicher Ansicht die Vorbiegestation in Abstreifstellung,
Figur 18 in gleicher Ansicht die Vorbiegestation in Abstreifstellung mit hochgehobener Schwenkhaltehaube,
Figur 19 in gleicher Ansicht die Vorbiegestation mit bereits teilweise entnommenem Vorbiegewerkzeug,
Figur 20 in schematischer Seitenansicht die Ausrichtstation mit dem Ausrichtwerkzeug in Ausrichtstellung,
Figur 21 eine Schnittdarstellung gemäß Linie XXI-XXI in Figur 20,
Figur 22 eine Draufsicht auf das Haltehakenschwenkwerk, das Ausrichtwerkzeug und den Niederhalter mit geschlossenem Haltehaken,
Figur 23 einen der Ansicht gemäß Figur 22 entsprechenden Ausschnitt mit geöffnetem Haltehaken,
Figur 24 eine Schnittdarstellung etwa gemäß Linie XXIV-XXIV in Figur 22, und
Figur 25 eine Drauf- bzw. Stirnansicht auf das herausgenommene Ausrichtwerkzeug in Radform.

Gemäß Figur 1 weist die erfindungsgemäße Teigbearbeitungslinie eine Mehrzahl von Funktionskomponenten FC1, FC2, ... FCn auf, die direkt oder indirekt zusammenwirken und insbesondere funktionsmäßig einander reihenartig nachgeschaltet sein können. Jede der Funktionskomponenten ist in einem beispielsweise allen gemeinsamen Grundrahmen BF verankert und mit einem oder mehreren Antriebseinheiten Dr11, Dr12, Dr21, ... Drn1, Drn2, ... Drnn versehen, die der Bewegung, insbesondere Drehung von einsetzbaren und auswechselbaren Werkzeugen T11, T12, T13, T21, T22, ... Tn1, ... Tnn dienen. Die Werkzeuge T sind gruppenweise zusammengefasst, wobei jede Gruppe T11, T12, T13 beziehungsweise T21, T22 etc. einer bestimmten Funktionskomponente zugeordnet ist. Es können gleichartige Werkzeuge Tii einer bestimmten Funktionskomponente zueinander alternativ zum Einsatz kommen, je nach kundenspezifischer Teigstückform. Dementsprechend sind auch die Antriebseinheiten Dr je nach Teigstückform und zugehöriger Werkzeugversion unterschiedlich anzusteuern. Die Ansteuerung erfolgt über eine Rechnersteuerung CC, welche mit allen Antriebseinheiten Dr beispielsweise über ein Bussystem (nicht gezeichnet) in Verbindung steht. Zur funktionsgerechten Ansteuerung der Antriebseinheiten Dr je nach individuellem, eingesetztem Werkzeug T11, ...Tnn benötigt die Rechnersteuerung spezifische Informationen. Dazu ist jedes Werkzeug mit einem Informationsträger Tr versehen, welcher beispielsweise mit einem Transponder oder mit entsprechend einem Codierungsmuster angeordneten Metallvorsprüngen bzw. -stiften für induktive Näherungsschalter realisiert sein kann. Den Informationsträgern einer Werkzeuggruppe sind am Grundrahmen oder -gestell BF im Bereich der jeweils der Werkzeuggruppe zugeordneten Funktionskomponente eine Leseeinheit R1, R2, ..., Rn zugeordnet. Die jeweilige Leseeinheit kann in dem Bereich des Grundgestells BF angeordnet oder angebracht sein, wo sich die jeweilige Funktionskomponente FC befindet. Die Leseeinheit R ist zweckmäßig dazu ausgebildet, den Informationsträger Tr berührungslos abzutasten. Im Falle der Verwendung eines Transponders (bzw. Funketiketts) ist die Leseeinheit als Sende-Empfangs-Einheit realisiert. Im Falle von nach einem Codierungsmuster angeordneten Metallstiften auf dem Werkzeug T lässt sich die Leseeinheit mit einer Mehrzahl nach gleichem Codierungsprinzip angeordneten, induktiven Näherungsschaltern realisieren, welche je nach Vorhandensein oder Nichtvorhandensein eines Metallstiftes auf dem Werkzeug geöffnet oder geschlossen sind. Aus den so erhaltenen Binärinformationen oder auch vom Transponder gefunkten Antwort-Daten kann die Rechnersteuerung CC, welcher die jeweilige Leseeinheit die Informationen und Daten weitergereicht hat, auf das jeweils eingesetzte Werkzeug und das entsprechende herzustellende Produkt, beispielsweise Schwabenbrezel oder bayerische Brezel, schließen. Passen Werkzeuge innerhalb einer Funktionskomponente oder unterschiedlicher Funktionskomponenten nicht zusammen oder ergibt sich wegen mangelnder Werkzeug-Koordination die Gefahr von Kollisionen und damit einhergehenden, mechanischen Beschädigungen, kann dies über ein in der Rechnersteuerung CC eingerichtetes Vergleichsprogramm vorbeugend erkannt werden. Mit den Ausgangsdaten des Vergleichsprogrammes werden entsprechende Stellbefehle zum Stillsetzen der Antriebe Dr erzeugt, um Kollisionen und Beschädigungen vermeiden.

Gemäß Figur 2 sind bei einer Teigbearbeitungslinie zum Einsatz der Erfindung folgende Bearbeitungsstationen hintereinander angeordnet: Trocknungsstation 1 zum Trocknen des Bauchabschnitts der Brezelteigstränge, damit sie an der nachfolgenden Ausrichtstation nicht verkleben; Vorbiegestation 2 zum Biegen des Brezelstrangs in Hufeisenform; Ausrichtstation 3 zum symmetrischen Ausrichten des vorher vermessenen Berzelstrangs; Formplatte 4 zur Vorgabe der Größe des Bauchabschnitts des Brezel-Teigtrangs; Schlingwerk 5 mit Greiforganen zum Erfassen der Teigstrangenden und zur Durchführung des Schlingvorgangs; Knotenspanner 6 zum Fixieren und Positionieren des Knotens der Brezel in der Mitte; Zwischentisch 7 zum Transport der fertigen Teigstücke in Brezelform zwecks nachfolgender Absetzung; Absetzstation 8 zum Absetzen der fertiggeschlungenen Teigstücke auf ein Backblech oder einen Förderbandtisch. Je nach kundenspezifischer Biege- oder Schlingform, welche sich beispielsweise bei der bayerischen und der schwäbischen Brezel unterscheiden, sind insbesondere bei der Vorbiegestation 2, der Ausrichtstation 3, dem Formtisch 4 und dem Schlingwerk 5 unterschiedliche Werkzeuge zu verwenden.

Gemäß Figur 3 ist bei dem Grundgestell-Abschnitt, der für die Funktionskomponente "Teigstrang-Formtisch" vorgesehen ist, ein Innenraum 9 ausgebildet, welcher der Aufnahme einer Wechselformeinheit 10 mit nebeneinander beabstandet verlaufenden Förderbändern 11 und der Teigstrangformung dienenden Haltestiften 12 (vgl. eingangs genannter Stand der Technik) dient. Zum Antrieb der Förderbänder 11 ist an der Innenseite des Grundgestells BF eine Antriebseinheit 13 abgestützt, welche über beispielsweise einen Riementrieb 14 und eine formschlüssige Antriebskupplung 15 eine Antriebswelle 16 in Drehung versetzen kann, um welche die Förderbänder 11 geschlungen sind.

Wie aus Figur 3 ersichtlich, ist bei der Wechselformeinheit 10 der Informationsträger mit einem Ensemble beispielsweise dreier Lichttaster-Reflektoren versehen, die an der Halterungswandung 28 nach außen vorspringend angeordnet und drei Lichttastern LT zugeordnet sind, die im Grundrahmen BF eingebaut oder daran befestigt sind. Wie zeichnerisch angedeutet, sind aus den ebenfalls als Ensemble angeordneten, drei Lichttastern LT jeweils Signalkabel S zur Ankopplung an die Rechnersteuerung CC herausgeführt. Im montierten Zustand der Wechselformeinheit 10 springen die Reflektoren LR in Richtung zu den Lichttastern LT vor, wobei je ein Paar aus Reflektor und Lichttaster eine gemeinsame Flucht aufweisen. Diese Flucht verläuft etwa senkrecht zur Teig-Transportrichtung, wobei die jeweiligen Paare aus Reflektor und Lichttastern in Teig-Transportrichtung hintereinander angeordnet sind und mit ihrenLängsseiten parallel nebeneinander verlaufen. In den Lichttastern LT ist zweckmäßig die gesamte Elektronik (Sender und Empfänger für Licht) mit einem gemeinsamen Gehäuse konzentriert. Für die Reflektoren lassen sich zweckmäßig "Katzenaugen" (an sich bekannt) einsetzen. Bei einer Wechselformeinheit können statt drei Reflektoren LR nur noch zwei, ein oder gar kein Reflektor beziehungsweise Reflektorlücken vorgesehen sein, was einer Binärkodierung der jeweiligen Wechselformeinheit entspricht.

Die Antriebskupplung 15 ist mit zwei einander gegenüberliegend an den Innenwandungen des Grundgestells BF angebrachten Halterungselementen 17 und 18 gebildet. Das erste Halterungselement 17 ist mit einer vom Riementrieb 14 drehbaren Abtriebswelle 19 realisiert, deren von der Grundgestell-Innenwandung vorspringendes Stirnende eine Quernut 20 aufweist. Diese dient zur formschlüssigen Aufnahme eines komplementär zur Quernut 20 geformten Quervorsprungs 21, welcher am unmittelbar gegenüberliegend zugeordneten Stirnende der Antriebswelle 16 der Formeinheit 10 erhaben ausgebildet ist. Ist der Quervorsprung 21 in die Quernut 20 eingerückt, ergibt sich eine drehmomentübertragende formschlüssige Eingriffsverbindung zwischen der Abtriebswelle 19 und der Antriebswelle 16. Diese Eingriffsverbindung lässt sich durch das zweite Halterungselement 18 unterstützen, sichern und festlegen. Dazu ist das zweite Halterungselement 18 mit einem quer zur Grundgestell-Wandung verschiebbaren Eingriffsbolzen 22 realisiert, der in einer von der Wandung nach außen kragenden Führungshülse 23 bezüglich der Förderband-Antriebswelle 16 bzw. deren mittlerer Längsachse 24 (vgl. Fig.4, 5, 6 und 7) axial gegen die Kraft einer Anstellfeder 25 geführt ist. Letztere ist dazu - vgl. Fig.7 - einerseits gegen die stirnseitige Innenwandung der Führungshülse 23 und andererseits gegen eine ringförmig umlaufende Abstützschulter 26 auf dem Außenmantel des Eingriffsbolzens 22 abgestützt, wie in Figur 7 vergrößert dargestellt. Die Anstellfeder 25 ist dabei auf Druck belastet, so dass von ihr der Eingriffsbolzen 22 über seine Abstützschulter 26 durch die Grundgestell-Wandung in Richtung Innenraum 9 gedrückt wird. Zur Erleichterung der Montage ist das dem Innenraum des Grundgestells BF zugewandte Stirnende 27 des Eingriffsbolzens 22 kegelförmig bzw. konisch verjüngt auslaufend gestaltet, wodurch beim Einrücken in eine zugeordnete Halterungswandung 28 der Wechselformeinheit 10 sich eine zentrierende, die Montage erleichternde Wirkung erzielen lässt. Die gegenüberliegende Halterungswandung 28 (vgl. auch Figur 8) ist zweckmäßig mit einer Einrastvertiefung (nicht gezeichnet) auf ihrer der Grundgestell-Innenwandung gegenüber liegend zugeordneten Außenseite versehen. Die Einrastvertiefung besitzt vorteilhaft eine Form, die komplementär zur Kegel-/Konusform des Stirnendes 27 des Eingriffsbolzens 22 gestaltet ist. Das entgegengesetzte Stirnende des Eingriffsbolzens 22 ist als Handhabe 29 ausgestaltet, wodurch sich der Eingriffsbolzen gegen die Kraft der Anstellfeder 25 aus dem Grundgestell BF nach außen ziehen lässt, um im vorher montierten Zustand (vgl. Figur 8) den Eingriffsbolzen aus der gegenüberliegenden Halterungswandung der Wechselformeinheit 10 auszurasten.

Als drittes Halterungselement 30 ist an einer Innenwandung des Grundgestells BF, wie am besten in Figur 4 erkennbar, eine manuell betätigbare Hebelaufnahme 31 über eine Schwenkachse 32 angelenkt, die quer zur Grundgestell-Wandung verläuft. Auf einem Oberabschnitt ist die Hebelaufnahme 31 mit einer von einem Hakenteil 33 umgrenzten Aufnahmeaussparung 34 gestaltet, welche der Aufnahme eines Haltebolzens 35 (vgl. Figur 5) dient, der an einer Außenseite der Wechselformeinheit 10 befestigt ist und vorspringt. Gemäß Figur 5 springt an der gegenüberliegenden Außenseite der Wechselformeinheit 10 ein weiterer, gleichartiger Haltebolzen 35a vor, der einer gleichartigen Hebelaufnahme mit Aufnahmeaussparung an der gegenüber liegenden Rahmen/Gestell-Innenseite zugeordnet ist. Die zweite Hebelaufnahme ist gemeinsam mit der erstgenannten Hebelaufnahme 31 über die Schwenkachse 32 angelenkt, welche sich zu diesem Zweck gemäß Figur 3 von einer Innenseite des Grundgestells BF zur gegenüberliegenden Innenseite erstreckt. Gemäß Figur 3 ist zumindest eine der beiden an den Grundgestell-Innenseiten gegenüberliegenden Hebelaufnahmen 31 mit einer seitlich nach außen ragenden Schwenkhandhabe 36 zum manuellen Ein- und Ausrasten des Haltebolzen 35 versehen. Über die Schwenkhandhabe 36 lässt sich zum Ausrasten und Demontieren der Wechselformeinheit 10 die Hebelaufnahme 31 um ihre Schwenkachse 32 nach oben verschwenken. Dies erfolgt zweckmäßig gegen die Kraft einer Rückhalte-Zugfeder 37, die an wenigstens einer der beiden Hebelaufnahmen 31 einerseits und an einem nach innen vorspringenden Haken 38 an der Innenwandung des Grundgestells BF eingehängt ist. Die Rückhaltefeder 37 kann so dafür sorgen, dass ohne manuelle Betätigung die beiden Haltebolzen 35 der Wechselformeinheit 10 sicher in der jeweiligen Aufnahmeaussparung 34 der beiden Hebelaufnahmen 31 gehalten werden.

Zur weiteren Erleichterung der Montage, insbesondere zum erleichterten Einsetzen der Wechselformeinheit 10 in den Innenraum 9, sind die beiden Hebelaufnahmen 31 noch zusätzlich mit einer jeweiligen Gleitführungsrampe 39 auf der Oberseite in dem unteren oder der Schwenkhandhabe 36 abgewandten Endbereich gestaltet. Diese verläuft gegenüber der Horizontalen schräg und kann so dazu dienen, die etwa über ihre beidseitigen Haltebolzen 35 auf die Rampen 39 aufgesetzte Wechselformeinheit so zu geleiten, dass die beidseitigen Haltebolzen 35 in die beidseitigen Aufnahmeaussparungen 34 der jeweiligen Hebelaufnahme 31 geleitet werden.

Für das Auswechseln bzw. die Demontage einer Wechselformeinheit aus dem Innenraum des Formtisches ergeben sich folgende Demontageschritte:

Die beiden, über die gemeinsame Schwenkachse 32 verbundenen Hebelaufnahmen 31 werden mittels der Schwenkhandhabe 36 nach oben geschwenkt. Dabei werden die beidseitigen Haltebolzen 35 des Formtisches 10 von der hakenartigen Aufnahmeaussparung 34 freigegeben und freigelegt. Der Hakenteil 33 der jeweiligen Hebelaufnahme 31 öffnet sich gleichsam. Zur weiteren Demontage verschwenkt nun die Wartungsperson die Wechselformeinheit 10 um die Förderband-Antriebswelle 16 nach oben. Nun ist der Eingriffsbolzen 22 zu lösen. Dieser wird dazu an seiner Zug-Handhabe 29 aus der komplementären Vertiefung der Halterungswandung 28 der Wechselformeinheit 10 gegen die Kraft der Anstellfeder 25 herausgezogen. Nachfolgend oder gleichzeitig kann nun die Wechselformeinheit 10 parallel zur mittleren Längs-/Drehachse 24 der Antriebswelle 9 der Ausziehbewegung des Eingriffsbolzens 22 nachgeführt werden. Dabei wird der Quervorsprung 21 der Förderband-Antriebswelle 16 aus der komplementären Quernut 20 der das Grundgestell BF durchsetzenden Abtriebswelle 19 herausgezogen. Damit ist die Antriebskupplung 15 für die Wechselformeinheit 10 gelöst, und letztere aus dem Innenraum 9 ohne Behinderung entnehmbar.

Gemäß Figur 11 ist bei der erfindungsgemäßen Vorrichtung eine Funktionskomponente als Schlingwerk mit einer im oberen Bereich angeordneten Antriebseinheit 40 und einem an deren unteren Ende angekoppelten Wechsel-Schlingwerkzeug 41 realisiert. In Figur 11 nicht gezeichnet ist ein möglicherweise vorhandener Linearantrieb, an dem über ein Halteteil 42 die Dreh-Antriebseinheit 40 gegenüber dem (in Figur 11 nicht gezeichneten) Grundgestell das Schlingwerk 5 linear in und entgegen der Teigstrang-Förderrichtung verfahrbar sein kann. Der Linearantrieb ist gegen das Grundgestell abgestützt. Wegen der grundsätzlichen Funktionsweise und Struktur eines solchen Schlingwerks wird auf die eingangs genannte Fundstelle WO-A-2005/0 654 458 verwiesen.

Gemäß Figur 11a sind auf dem Wechsel-Schlingwerkzeug 41 oberhalb von dessen Tragtraverse 46 auf einer Oberplatte 46a oder dergleichen im Ensemble drei LichtReflektoren LR längs einer Kreislinie um die Drehachse A angeordnet. Gemäß Figur 11 braucht diesem Dreier-Ensemble, welches eine bestimmte Binärkodierung zur Kennzeichnung des jeweils eingesetzten, individuellen Wechselschlingwerkzeugs 41 aufweist, bei der Drehantriebseinheit 40 nur ein einziger Lichttaster LT zugeordnet zu sein. Dieser ist an einem senkrecht vorspringenden Tragarm 40a so befestigt, dass die Lichtsende- und Empfangsrichtung des Lichttasters LT etwa parallel zur Drehachse A ausgerichtet sind und bei entsprechender Drehstellung mit einem der drei Lichtreflektoren fluchten bzw. deckungsgleich liegen. Ein auszuwechselndes, anderes Schlingwerkzeug lässt sich vom Dargestellten durch Änderung der Binärkodierung unterscheiden, indem ein, zwei oder alle drei Lichtreflektoren LR weggelassen bzw. blind ausgeführt sind, so dass entsprechend weniger Lichttaster-Schaltvorgänge über die Signalleitung S angesteuert werden. Der Lichttaster LT tastet bei Drehung des Schlingwerkzeugs 41 je nach Binärkodierung keinen, einen, zwei, drei usw. Lichtreflektoren als existent ab. Zusätzlich kann noch eine Winkelinformation mit dem abgetasteten Lichtreflektor verknüpft werden, die z. B. bei Verwendung von Servoantrieben systeminhärent vorliegt. Dann lässt sich feststellen, ob entsprechend dem gezeichneten Beispiel bei einem Dreier-Ensemble der mittlere Reflektor weggelassen bzw. verdeckt bzw. nicht reflektierend ausgeführt ist, was einer bestimmten Binärkodierung entsprechen würde.

Gemäß Figur 11 ist das Wechsel-Schlingwerkzeug 41 mit zwei Teigstrang-Greifern 43 versehen, deren Abstand d an die jeweils kundenspezifisch gewünschte Brezelform und -größe angepasst sein muss. Entsprechendes gilt für die bereits zuvor erwähnten Funktionskomponenten Vorbiegestation 2, Ausrichtstation 3 und Formtisch 4. Um das Schlingwerkzeug 41 mit einem bestimmten Greifer-Abstand d durch ein anderes mit einem anderen Greifer-Abstand auswechseln zu können, ist eine Überwurfmutter 44 zu lösen, welche die Antriebseinheit 40 mit dem Schlingwerkzeug 41 verschraubt beziehungsweise verbindet. Nach ausreichendem Lösen der Überwurfmutter 44 lässt sich das Schlingwerkzeug nach unten abziehen, wobei die Wartungsperson das Schlingwerkzeug 41 gegen Herunterfallen mittels eines Griffvorsprungs 45 sichern kann, der von einer Tragtraverse 46 in einer Flucht mit der Drehachse der Drehantriebseinheit 40 nach unten ragt.

Gemäß Figur 12 dienen als Kopplungsmittel zwischen einer Ausgangs- bzw. Abtriebswelle 47 der Drehantriebseinheit 40 und einer Eingangs- bzw. Antriebswelle 48 des Wechsel-Schlingwerkzeugs 41 vor allem die genannte Überwurfmutter 44, die aneinander liegenden Stirnenden der Ausgangs- und Eingangswelle 47, 48 und eine noch weiter unten angesprochene, in der Technik an sich bekannte Drehdurchführung.

Die Überwurfmutter 44 ist am der Eingangswelle 48 zugeordneten Stirnende der Ausgangswelle 47 axial verschiebbar von einer ringartigen Anschlagschulter 49 gehalten, welche vom stirnseitigen Endbereich der Ausgangswelle 47 radial vorspringt (vgl. Figur 13). Zum Anschlag an dieser Anschlagschulter 49 besitzt die Überwurfmutter 44 querschnittlich L-artiges Profil, wobei der kürzere L-Schenkel 50 mit seiner Innenseite zur Auflage auf die Anschlagschulter 49 ausgebildet und angeordnet ist. Ferner kann die Überwurfmutter 44 in dem Außenmantelabschnitt der Ausgangswelle 47, der sich an die Anschlagschulter 49 zum mittleren Bereich hin anschließt, aufgrund eines entsprechend radialen Spiels axial hin und her gleiten (vgl. axiale Hin- und Herbewegungen 51). Das Spiel besteht zwischen dem genannten Außenmantel und dem vom kürzeren L-Schenkel ringförmig umgrenzten Innenraum. Liegt dieser auf der Anschlagschulter 49 auf, kämmt ein Innengewinde der Überwurfmutter 44 mit einem komplementären Außengewinde 48a am Außenmantel im Endbereich der Eingangswelle 48, woraus sich ein Schraubeingriff 52 zwischen der Überwurfmutter 44 und der Eingangswelle 48 ergibt. Dabei werden über den kürzeren L-Schenkel 50, der auf die Anschlagschulter 49 per Schraubeingriff 52 gedrückt wird, die Stirnseiten der Ausgangs- und Eingangswellen 47, 48 aneinander gepresst.

Um das der Ausgangswelle 47 von der Drehantriebseinheit 40 eingeprägte Drehmoment auf die Eingangswelle 48 für das Wechsel-Schlingwerkzeug 5 zu übertragen, erstreckt sich zwischen den Stirnendbereichen der Ausgangs- und Eingangswellen 47, 48 ein Mitnehmerbolzen 53, der gemäß Figuren 14 und 15 exzentrisch gegenüber den fluchtenden, mittleren Längsachsen 54 der beiden Wellen 47, 48 angeordnet ist. Die mittlere Längsachse 55 des Mitnehmerbolzens 53 verläuft gemäß Figuren 14 und 15 nach außen exzentrisch versetzt und parallel zur Wellen-Mittelachse 54. Dadurch wird eine Drehung 56 der Ausgangswelle 47 über den Mitnehmerbolzen 53 in ein entsprechendes Drehmoment für die Eingangswelle 48 zur Drehung des Schlingwerkzeugs 5 umgesetzt.

Gemäß Figur 14 ist auf der dem Schlingwerkzeug 5 zugeordneten Stirnseite der Ausgangswelle 47 zentrisch, d. h. deckungsgleich mit der Mittel- bzw. Drehachse 54, ein vorspringender Zentrierzapfen 57 ausgebildet, dem auf der gegenüberliegenden Stirnseite der Eingangswelle komplementär eine Zentriervertiefung 58 zugeordnet ist.

Gemäß Figuren 12-15 umfasst die oben angesprochene Drehdurchführung mehrere Fluidleitungen 59, die von Dichtungen 60 beaufschlagt sind. Die Fluidleitungen 59 sind gemäß Figuren 14 und 15 symmetrisch und kranzartig um die Drehachse 54 herum angeordnet. Zusammen mit der Überwurfmutter 44 und dem Mitnehmerbolzen 53 ist so eine kodierte Steck- und Schraub- und Mitnehmerverbindung zur Energiekopplung realisiert, bei der der Mitnehmerbolzen 53 beim Ineinanderstecken dafür sorgt, dass die Fluidleitungen innerhalb der Eingangs- und Ausgangswellen 48, 47 und der Zentrierzapfen 57 mit der Zentriervertiefung 58 fluchten. Mithin kann der Mitnehmerbolzen 53 für ein funktionsgerechtes und drehlagerichtiges Ansetzen der unteren Eingangswelle 48 an die Stirnseite der oberen Ausgangswelle 47 sorgen.

Gemäß Figuren 16-19 lässt sich bei der Vorbiegestation 2 ein Vorbiegewerkzeug 61 dadurch entnehmen und austauschen, dass eine Wartungsperson unter die Schwenkhaltehaube 65 greift und diese in Hochschwenkrichtung 69 anhebt. Durch die Kraft der Rückhalte- oder Ausstoßfeder 64 springt das Vorbiegewerkzeug 61 aus der Halterung, wie aus Figur 19 ersichtlich.

Gemäß Figur 16 lässt sich das jeweilige Wechsel-Vorbiegewerkzeug 61 und der damit zusammenhängende Abstreifer 62 mit ihren jeweiligen individuellen Abmessungen durch einen Informationsträger identifizieren, der analog zu Figur 3 mit einem Dreier-Ensemble an Lichtreflektoren LR realisiert ist. Die Reflektionsrichtung aller drei Lichtreflektoren LR verläuft etwa parallel zur Teigstrang-Förderrichtung, so dass in der Seitenansicht gemäß Figur 16 nur einer der drei Lichtreflektoren LR sichtbar ist; die anderen beiden sind verdeckt. Den drei Lichtreflektoren LR, die senkrecht vom Außenmantel des Abstreifers 62 vorspringen, sind analog nebeneinander in Reihe quer zur Teig-Förderrichtung angeordnete Lichttaster LT mit Signalausgangskabel S zugeordnet. Diese sind direkt oder indirekt am Grundrahmen BF, im gezeichneten Beispiel direkt an der stationären Schwenkhaltehaube 65 angebracht. Was die Binärkodierung angeht, gelten die obigen Ausführungen zu Figur 3 und 11 bzw. 11a analog.

Zum Auswechseln des radförmigen Ausrichtwerkzeugs 74 und des daran angepassten Niederhaltes 75 (vgl. Fig.20 - 25) wird der Haltehaken von der in Figur 22 dargestellten, geschlossenen Stellung in die in Figur 23 dargestellte, offene Stellung geschwenkt, so dass der Eingriffsstift 79 frei wird. Das Richtrad 74 lässt sich in Verbindung mit Figur 2 nach unten anhand der Schiebeführungsnut 81 nun herausziehen. Umgekehrt kann der Niederhalter 75 nach schräg oben herausgezogen und ebenfalls ausgetauscht werden.

Zur Identifikation des jeweils eingesetzten Niederhalters 75, dessen kreisförmige Aussparung an den individuellen Durchmesser des jeweils verwendeten Richtrades 74 angepasst ist, sind gemäß Figur 22 im Randbereich des Niederhalters 75 in Teigstrang-Förderrichtung hintereinander ein Dreier-Ensemble bildende Lichtreflektoren LR aufgesetzt (siehe auch Seitenansicht in Figur 20). Gemäß Figur 20 sind diesen drei Lichtreflektoren LR in entsprechender, in Teigstrang-Förderrichtung verlaufender Reihenanordnung drei Lichttaster LT zugeordnet, die am (nicht gezeichneten) Grundrahmen befestigt sind. Wegen der Binärkodierung wird auf die obigen Ausführungen zu Figur 3, Figuren 11, 11a und Figur 16 entsprechend verwiesen.

### Bezugszeichenliste

- FCl, FCn: Funktionskomponenten
- BF: Grundrahmen, -gestell
- Dr11...Drnn: Antriebseinheit
- T11-Tnn: Werkzeug
- CC: Rechnersteuerung
- R1...Rn: Leseeinheit
- Tr: Informationsträger
- LR: Lichttaster-Reflektoren
- LT: Lichttaster
- S: Signalleitung
- A: Drehachse
- 1: Trocknungsstation
- 2: Vorbiegestation
- 3: Ausrichtstation
- 4: Formtisch
- 5: Schlingwerk
- 6: Knotenspanner
- 7: Zwischentisch
- 8: Absetzstation
- 9: Innenraum
- 10: Wechselformeinheit
- 11: Förderband
- 12: Haltestifte
- 13: Formtisch-Antriebseinheit
- 14: Riementrieb
- 15: Antriebskupplung
- 16: Antriebswelle
- 17: erstes Halterungselement
- 18: zweites Halterungselement
- 19: Abtriebswelle
- 20: Quernut
- 21: Quervorsprung
- 22: Eingriffsbolzen
- 23: Führungshülse
- 24: mittlere Längsachse/Drehachse
- 25: Anstellfeder
- 26: Abstützschulter
- 27: konisches/kegelförmiges Stirnende
- 28: Halterungswandung
- 29: Zug-Handhabe
- 30: drittes Halterungselement
- 31: Hebelaufnahme
- 32: Schwenkachse
- 33: Hakenteil
- 34: Aufnahmeaussparung
- 35: Haltebolzen
- 35a: weiterer, gegenüber liegender Haltebolzen
- 36: Schwenkhandhabe
- 37: Rückhalte-Zugfeder
- 38: Feder-Innenhaken
- 39: Gleitführungsrampe
- 40: Drehantriebseinheit
- 40a: Tragarm
- 41: Wechsel-Schlingwerkzeug
- 42: Halteteil
- 43: Teigstrang-Greifer
- d: Distanz
- 44: Überwurf-Mutter
- 45: Griffvorsprung
- 46: Tragtraverse
- 46a: Oberplatte
- 47: Ausgangswelle
- 48a: Außengewinde
- 48: Eingangswelle
- 49: Anschlagschulter
- 50: kürzere L-Schenkel
- 51: axiale Hin- und Herbewegungen
- 52: Schraubeingriff
- 53: Mitnehmerbolzen
- 54: mittlere Längsachsen/Drehachse
- 55: mittlere Bolzenachse
- 56: Drehung
- 57: Zentrierzapfen
- 58: Vertiefung
- 59: Fluidleitungen
- 60: Dichtungen
- 61: Vorbiegewerkzeug
- 62: Abstreifer
- 63: Stellzylinder, z. B. pneumatisch
- 63a: Stößel
- D: Teigstück/-strang
- 64: Rückhol-/Ausstoßfeder
- 65: Schwenkhaltehaube
- 66: Gegenhaltebolzen
- 66a: Anlageschulter
- 67: Gleitrampe für Haken der Schwenkhaltehaube
- 67a: Eingriffshaken für 66a
- 68: Ausziehrichtung für Vorbiegewerkzeug
- 69: Hochschwenkrichtung
- 70: Schubprofil
- 71: Traverse
- 72: Drehantrieb
- 73: Hebeantrieb
- 74: Ausrichtwerkzeug/Richtrad
- 75: Niederhalter
- 76: Durchbruch
- 77: Niederhalter-Ausziehrichtung
- 78: Haltehaken
- 79: Eingriffsstift
- 80: Schwenkwerk
- 81: Schiebeführungsnut

## Patentansprüche

1. Vorrichtung zur maschinellen Herstellung oder Bearbeitung von gebogenen und/oder geschlungenen Teigstücken (D), insbesondere in Brezel-Form, mit mindestens einer Funktionskomponente (FC), welche ein Werkzeug (T) zur Teigbearbeitung umfasst, das an die spezifische Biege- und/oder Schlingform des jeweils herzustellenden Teigstücks (D) geometrisch und/oder konstruktiv angepasst ist, wobei die Funktionskomponente (FC) mit einem Grundgestell (BF) versehen oder verbunden ist, das über eine lösbare Eingriffsverbindung zur je nach der Biege- oder Schlingform wechselbaren Aufnahme des Werkzeugs (T) der Funktionskomponente (FC) ausgebildet ist und wenigstens eine mit der jeweiligen Funktionskomponente (FC) gekoppelte Antriebseinheit (Dr) aufweist, die von einer Steuerung (CC) kontrollierbar ist, wobei das jeweilige Werkzeug (T) mit einem Informationsträger (Tr;LR) für Barcodes, Codierungsmuster oder sonstige maschinenlesbare Informationen insbesondere zur Werkzeug-Identifikation versehen ist, welcher Informationsträger (Tr) einer am Grundgestell (BF) angebrachten, automatisierten Leseeinheit (R;LT) zugeordnet ist, deren Ausgang (S) mit einer Eingangsschnittstelle der Steuerung (CC) gekoppelt ist, **dadurch gekennzeichnet, dass** die Leseeinheit (R) mit einem oder mehreren Näherungsschaltern (LT) realisiert ist, denen ein am Werkzeug (T) derart ausgebildeter Informationsträger (LR) zugeordnet ist, dass von diesem bei im Grundgestell (BF) aufgenommenen Werkzeug (T) der oder die Näherungsschalter (LT) durch den Informationsträger des Werkzeugs ansteuerbar sind.

2. Vorrichtung nach Anspruch 1, mit mehreren zusammenwirkenden Funktionskomponenten (FC) mit je mindestens einer Antriebseinheit (Dr), die jeweils mit der Steuerung (CC) zur Koordinierung koppelbar oder gekoppelt ist, **dadurch gekennzeichnet, dass** die Steuerung (CC) eine Überwachungs- und Vergleichseinrichtung zur Verarbeitung der von den Werkzeugen (T) per jeweiliger Leseeinheit (R;LT) erhaltenen Informationen aufweist, und die Vergleichseinrichtung programm- und/oder schaltungstechnisch zur Erzeugung und Ausgabe von Stellbefehlen an die Antriebseinheiten (Dr) und/oder einer Fehlermeldung abhängig vom jeweils erzielten Vergleichsergebnis eingerichtet ist.

3. Vorrichtung nach Anspruch 1 oder 2, **gekennzeichnet durch** einen oder mehrere induktive Näherungsschalter, denen eine entsprechend einem Informationscode gestaltete Metallstruktur oder -topografie am Werkzeug (T) zugeordnet ist, wobei die Metallstruktur oder -topografie insbesondere einen oder mehrere, vom jeweiligen Werkzeug (T) vorspringende Metallstifte oder auch Metallstift-Lücken umfasst, denen je ein Näherungsschalter am Grundgestell (BF) zugeordnet ist.

4. Vorrichtung nach Anspruch 1 oder 2, **gekennzeichnet durch** einen oder mehrere optische Näherungsschalter (LT), denen eine entsprechend einem Informationscode gestaltete Reflektorstruktur oder -topografie (LR) am Werkzeug (T) zugeordnet ist, wobei die Reflektorstruktur oder - topografie insbesondere mit einem oder mehreren, vom jeweiligen Werkzeug (T) vorspringenden Ansätzen (LR) und/oder Ansatzlücken ausgebildet sind, die Licht ganz oder teilweise reflektieren.

5. Vorrichtung nach einem der vorangehenden Ansprüche, **dadurch gekennzeichnet, dass** die Struktur oder Topografie der Informationsträger (LR) entsprechend einer Linie, eines Kreises oder einer sonst gekrümmten oder gewölbten Form auf dem Werkzeug (T) verläuft.

6. Vorrichtung nach Anspruch 3 oder 5, **dadurch gekennzeichnet, dass** der oder die Näherungsschalter (LT) einerseits und der oder die Metallstifte oder -lücken oder Ansätze (LR) oder Ansatz-Lücken andererseits einander in unterschiedlicher Zahl zugeordnet sind, wobei der oder die Näherungsschalter stationär und der oder die Metallstifte oder -lücken oder Ansätze (LR) oder Ansatz-Lücken am Werkzeug (T) angebracht sind, das an dem oder den Naherungsschaltern vorbei bewegbar ist.

7. Vorrichtung nach einem der vorangehenden Ansprüche, **dadurch gekennzeichnet, dass** die Leseeinheit (R) zum Ansprechen auf wenigstens einen Transponder (Tr) ausgebildet ist, der am im Grundgestell (BF) aufgenommenen oder aufnehmbaren Werkzeug (T) angebracht ist.

8. Vorrichtung nach einem der vorangehenden Ansprüche, **gekennzeichnet durch** einen Teigstrang-Formtisch (4) als Funktionskomponente (FC) oder als eine der Funktionskomponenten (FC), wobei das zugehörige Grundgestell (BF) einen Innenraum (9) zur Aufnahme einer davon herausnehmbaren, zur Teigstrang-Auflage ausgebildeten Wechselformeinheit (10) begrenzt oder umgibt und an seiner oder seinen Innenseiten ein oder mehrere Halterungselemente (17,18,30) aufweist, die zum Eingriff mit einem oder mehreren komplementären Gegenhalterungselementen (21,28,35) an der Wechselformeinheit (10) ausgebildet sind, wobei das oder eines der Halterungs- oder Gegenhalterungselemente (17,18,30, 21,28,35) als mindestens eine manuell betätigbare Hebelaufnahme (31) mit einer hakenartigen Aussparung (33,34) zum Einrücken und Tragen eines Vorsprungs (35) der Wechselformeinheit (10) oder des Grundgestells (BF) ausgebildet und an einer Innenwandung des Grundgestells (BF) beziehungsweise an einer Außenwandung der Wechselformeinheit (10) angelenkt ist.

9. Vorrichtung nach Anspruch 8, **dadurch gekennzeichnet, dass** die Hebelaufnahme (31) gegen die Kraft eines Federelements (37) verschwenkbar angelenkt ist, das am Grundgestell (BF) oder an der Wechselformeinheit (10) befestigt ist.

10. Vorrichtung nach Anspruch 8 oder 9, wobei der Formtisch (4) einen Förderantrieb (13,16,19) für Fördermittel (11) aufweist, welche in die Wechselformeinheit (10) baulich integriert und zur Erfassung und Bewegung von Teigsträngen angeordnet sind, **dadurch gekennzeichnet, dass** ein Halterungs- und ein Gegenhalterungselement (20,21,22) gemeinsam eine Antriebskupplung (15) für die Fördermittel (11) bilden, wobei ein Halterungselement (15) einen eine Grundgestell-Wandung manuell verschiebbar durchsetzenden Eingriffsbolzen (22) umfasst, dem zur Gegenhalterung eine Halterungswandung (28) der Wechselformeinheit (10) mit komplementärer Aufnahmeform zum kraft- und/oder formschlüssigen Eingriff gegenüberliegend zugeordnet ist.

11. Vorrichtung nach Anspruch 10, **dadurch gekennzeichnet, dass** der Eingriffsbolzen (22) in der Wandung gegen Federkraft (25) verschiebbar gelagert und zur manuellen Verschiebbarkeit eine an der Grundgestell-Außenseite auskragende Handhabe (29) besitzt.

12. Vorrichtung nach einem der vorangehenden Ansprüche, **gekennzeichnet durch** ein Teigstrang-Schlingwerk (5) als Funktionskomponente (FC) oder als eine der Funktionskomponenten, welches Schlingwerk (5) eine am zugehörigen Grundgestell (BF) angebrachte Antriebseinheit (40) und ein damit über manuell lösbare Kopplungsmittel (44,53,58,59) verbindbares Wechsel-Schlingwerkzeug (41) umfasst.

13. Vorrichtung nach Anspruch 12, **dadurch gekennzeichnet, dass** die Kopplungsmittel (44,53,58,59) eine von der Antriebseinheit (40) vorspringende Ausgangswelle (47) sowie eine vom Wechsel-Schlingwerkzeug vorspringende Eingangswelle (48) umfassen, deren Wellen-Stirnenden für ein formschlüssiges Ineinandergreifen zueinander komplementär ausgebildet sind.

14. Vorrichtung nach Anspruch 12 oder 13, **dadurch gekennzeichnet, dass** die Kopplungsmittel (44,53,58,59) eine von der Antriebseinheit (40) vorspringende Ausgangswelle (47) sowie eine vom Wechsel-Schlingwerkzeug ((41) vorspringende Eingangswelle (48) umfassen, deren Wellen-Stirnenden mit zentrischen und exzentrischen Positionierungsstiften- oder bolzen (53,57) und zugeordneten komplementären Vertiefungen (58) versehen sind.

15. Vorrichtung nach Anspruch 13 oder 14, wobei das Wechsel-Schlingwerkzeug (41) mit einer oder mehreren, eigenen Antriebseinheiten für beispielsweise Greiforgane (43) versehen ist, **dadurch gekennzeichnet, dass** die Kopplungsmittel (44,53,58,59) eine Drehdurchführung (59) für den Übergang von der Ausgangs- zur Eingangswelle (47,48) umfassen, insbesondere eine baulich innerhalb der Ausgangs- und/oder Eingangswelle (47,48) integrierte Drehdurchführung (59).

## Claims

1. A device for the automated production or processing of bent and/or knotted pieces of dough (D), in particular in the shape of pretzels, having at least one functional component (FC) which comprises a tool (T) for processing the dough, said tool being adapted geometrically and/or constructionally to the specific bent and/or knotted shape of the respective piece of dough (D) to be produced, the functional component (FC) being provided with or connected to a basic frame (BF) which is designed to interchangeably receive the tool (T) of the functional component (FC) depending on the shape of the bend or knot by means of a detachable engageable connection and having at least one drive unit (Dr) coupled to the respective functional component (FC), which drive unit can be controlled by a control (CC), the respective tool (T) being provided with an information carrier (Tr;LR) for barcodes, coding patterns or other machine-readable information, in particular for tool identification, which information carrier (Tr) is assigned to an automated reading unit (R; LT) attached to the basic frame (BF) and the output (S) of which is coupled with an input interface of the control (CC), **characterised in that** the reading unit (R) is produced with one or more proximity switch(es) (LT) to which is assigned an information carrier (LR) formed on the tool (T) such that when the tool (T) is held in the basic frame (BF), the proximity switch or switches (LT) can be controlled by the information carrier of the tool.

2. The device according to Claim 1, having a number of interacting functional components (FC), each with at least one drive unit (Dr) which in each case is or can be coupled with the control (CC) for coordination, **characterised in that** the control has a monitoring and comparison device for processing the information received from the tools (T) for each respective reading unit (R; LT), and the comparison device is set up in terms of programmes and/or circuitry in order to generate and output positioning commands to the drive units (Dr) and/ or a fault signal dependently upon the respectively obtained comparison result.

3. The device according to Claim 1 or 2, **characterised by** one or more inductive proximity switches to which is assigned a metal structure or topography on the tool (T) configured according to an information code, the metal structure or topography comprising in particular one or more metal pins projecting from the respective tool (T) or also metal pin gaps to which is assigned a proximity sensor on the basic frame (BF) in each case.

4. The device according to Claim 1 or 2, **characterised by** one or more optical proximity sensors (LT) to which is assigned a reflector structure or topography (LR) on the tool (T) configured according to an information code, the reflector structure or topography being formed in particular with one or more attachments (LR) projecting from the respective tool (T) and/or attachment gaps which totally or partially reflect light.

5. The device according to any of the preceding claims, **characterised in that** the structure or topography of the information carriers (LR) runs over the tool (T) according to a line, a circle or some other curved or arched form.

6. The device according to Claim 3 or 5, **characterised in that** the proximity switch or switches (LT) on the one hand and the metal pin or pins or gaps or attachments (LR) or attachment gaps on the other hand are assigned to one another in varying numbers, the proximity switch or switches being stationary and the metal pin or pins or gaps or attachments (LR) or attachment gaps being attached to the tool (T) which can be moved past the proximity switch or switches.

7. The device according to any of the preceding claims, **characterised in that** the reading unit (R) is designed to respond to at least one transponder (Tr) which is attached to the tool (T) that is or can be held in the basic frame (BF).

8. The device according to any of the preceding claims, **characterised by** a dough strand shaping table (4) as a functional component (FC) or as one of the functional components (FC), the corresponding basic frame (BF) delimiting or surrounding an internal space (9) for receiving an interchangeable shaping unit (10) designed to support the strand of dough and which can be removed from said internal space, and having one or more retaining elements (17, 18, 30) on its inside or its insides which are designed to engage with one or more complementary counter-retaining elements (21, 28, 35) on the interchangeable shaping unit (10), the or one of the retaining or counter-retaining elements (17, 18, 30, 21, 28, 35) being designed as at least one manually operable lever holder (31) with a hook-like recess (33, 34) for the insertion and support of a projection (35) of the interchangeable shaping unit (10) or of the basic frame (BF) and being hinged on an inner wall of the basic frame (BF) or on an outer wall of the interchangeable shaping unit (10).

9. The device according to Claim 8, **characterised in that** the lever holder (31) is hinged pivotably against the force of a spring element (37) which is fastened to the basic frame (BF) or to the interchangeable shaping unit (10).

10. The device according to Claim 8 or 9, the shaping table (4) having a conveyor drive (13, 16, 19) for conveyor means (11) which are integrated structurally into the interchangeable shaping unit (10) and are arranged to grasp and to move strands of dough, **characterised in that** a retaining and a counter-retaining element (20, 21, 22) together form a drive coupling (15) for the conveyor means (11), a retaining element (15) comprising a manually displaceable engagement bolt (22) that passes through a basic frame wall to which is assigned, lying opposite and for counter-retaining, a retaining wall (28) of the interchangeable shaping unit (10) with a complementary receiving shape for force- and/or form-fit engagement.

11. The device according to Claim 10, **characterised in that** the engagement bolt (22) is displaceably mounted in the wall against spring force (25) and for manual displaceability has a handle (29) protruding on the outside of the basic frame.

12. The device according to any of the preceding claims, **characterised by** a dough strand knotting unit (5) as a functional component (FC) or as one of the functional components, which knotting unit (5) comprises a drive unit (40) attached to the corresponding basic frame (BF) and an interchangeable knotting tool (41) that can be connected to said drive unit by manually releaseable coupling means (44, 53, 58, 59).

13. The device according to Claim 12, **characterised in that** the coupling means (44, 53, 58, 59) comprise an output shaft (47) projecting from the drive unit (40) and an input shaft (48) projecting from the interchangeable knotting tool, the shaft face ends of which are designed complementarily to one another for form-fit engagement.

14. The device according to Claim 12 or 13, **characterised in that** the coupling means (44, 53, 58, 59) comprise an output shaft (47) projecting from the drive unit (40) and an input shaft (48) projecting from the interchangeable knotting tool (41), the shaft face ends of which are provided with centric and eccentric positioning pins or bolts (53, 57) and assigned complementary indentations (58).

15. The device according to Claim 13 or 14, the interchangeable knotting tool (41) being provided with one or more distinct drive units, for example for grasping components (43), **characterised in that** the coupling means (44, 53, 58, 59) comprise a rotary transmission (59) for the transition from the output to the input shaft (47, 48), in particular a rotary transmission (59) integrated structurally within the output and/or input shaft (47, 48).

## Revendications

1. Dispositif pour la production ou le traitement par machine de pièces de pâte (D) courbes et/ou en boucle en particulier en forme de bretzel, avec au moins un composant fonctionnel (FC), lequel comporte un outil (T) de traitement de pâte qui est adapté dans sa géométrie et/ou sa construction à la forme courbe ou en boucle de chaque pièce de pâte (D) respective produite, dans lequel le composant fonctionnel (FC) est muni de ou lié à un cadre de base (BF) qui au moyen d'une connexion d'accouplement libérable est structuré pour recevoir, de façon interchangeable en fonction de la forme courbe ou en boucle, l'outil (T) du composant fonctionnel (FC) et qui comprend au moins une unité d'entraînement (Dr) couplée avec le composant fonctionnel (FC) respectif et pilotable par un dispositif de commande (CC), dans lequel l'outil respectif (T) est muni d'un support d'information (Tr ;LR) pour des codes à barres, des motifs de codage ou d'autres informations lisibles par machine en particulier pour l'identification de l'outil, lequel support d'information (Tr) est associé avec une unité de lecture automatisée (R ; Lt) attachée au cadre de base (BF) et dont la sortie (S) est couplée avec une interface d'entrée du dispositif de commande (CC), **caractérisé en ce que** l'unité de lecture (R) est réalisée avec un ou plusieurs détecteurs de proximité (LT) auxquels est associé un support d'information (LR) conformé sur l'outil (T) de façon que le ou les détecteurs de proximité (LT) puissent être sollicités par le support d'information de l'outil lorsque l'outil (T) est en position sur le cadre de base (BF).

2. Dispositif selon la revendication 1, avec plusieurs composants fonctionnels (FC) en interaction ayant chacun au moins une unité d'entraînement (Dr) qui chacune sont ou peuvent être couplées au dispositif de commande (CC) pour une coordination, **caractérisé en ce que** le dispositif de commande (CC) comprend un moyen de surveillance et un moyen de comparaison pour le traitement des informations obtenues de chaque unité de lecture (R ; LT) des outils (T), et ledit moyen de comparaison est un programme et/ou un circuit pour générer et émettre des commandes de positionnement aux unités d'entraînement (Dr) et/ou un message d'erreur dépendant de chaque résultat de comparaison généré.

3. Dispositif selon l'une des revendications 1 ou 2, **caractérisé par** un ou plusieurs détecteurs de proximité inductifs, auxquels est associée sur l'outil (T) une structure ou une topographie métallique conçue comme un code d'information correspondant, dans lequel la structure métallique ou la topographie comprend en particulier une ou plusieurs broches métalliques ou intervalles entre broches métalliques en saillie de l'outil (T) respectif, à chacune desquelles est associé un capteur de proximité sur le cadre de base (BF).

4. Dispositif selon l'une des revendications 1 ou 2, **caractérisé par** un ou plusieurs détecteurs de proximité optiques (LT), auxquels est associée sur l'outil (T) une structure ou une topographie réfléchissante (LR) conçue comme un code d'information correspondant, dans lequel la structure ou la topographie réfléchissante comprend en particulier une ou plusieurs proéminences (LR) et/ou intervalles entre proéminences en saillie de l'outil (T), qui réfléchissent la lumière de façon conséquente ou partielle.

5. Dispositif selon l'une des revendications précédentes, **caractérisé en ce que** la structure ou la topographie du support d'information (LR) s'étend sur l'outil (T) en particulier selon une ligne, un cercle ou une autre forme courbe ou en arc.

6. Dispositif selon la revendication 3 ou 5, **caractérisé en ce que** d'une part le ou les détecteurs de proximité (LT) et d'autre part la ou les broches métalliques ou intervalles entre broches ou la ou les proéminences (LR) ou intervalles entre proéminences sont en nombres différents, dans lequel le ou les détecteurs de proximité sont stationnaires et la ou les broches métalliques ou intervalles entre broches ou les proéminences (LR) ou intervalles entre proéminences sont disposés sur l'outil (T), lequel est déplaçable par rapport au ou aux capteurs de proximité.

7. Dispositif selon l'une des revendications précédentes, **caractérisé en ce que** l'unité de lecture (R) est conçue pour répondre à au moins un transpondeur (Tr) attaché à l'outil (T) placé ou pouvant être placé sur le cadre de base (BF).

8. Dispositif selon l'une des revendications précédentes, **caractérisé par** un moule de formage de boudin de pâte (4) en tant que composant fonctionnel (FC) ou en tant que l'un des composants fonctionnels (FC), dans lequel le cadre de base associé (BF) comprend un espace intérieur (9) destiné à recevoir une unité de moule interchangeable (10) apte à délivrer un cordon de pâte borné ou enroulé et détachable de celle-ci et comprend sur son ou ses côtés intérieurs un ou plusieurs éléments de soutien (17, 18, 30) conçus pour coopérer avec un ou plusieurs éléments de retenue (21, 28, 35) complémentaires sur l'unité de moule interchangeable (10), dans lequel le ou l'un des éléments de soutien ou des éléments de retenue (17, 18, 30, 21, 28, 35) est conçu comme au moins un réceptacle de levier (31), est actionnable manuellement avec un évidement en forme de crochet (33, 34) pour engager et supporter une saillie (35) de l'unité de moule interchangeable (10) ou du cadre de base (BF), et est articulé sur une paroi intérieure du cadre de base (BF) ou respectivement sur une paroi extérieure de l'unité de moule interchangeable (10).

9. Dispositif selon la revendication 8, **caractérisé en ce que** le réceptacle de levier (31) est articulé de manière pivotante à l'encontre d'un élément élastique (37) qui est fixé sur le cadre de base (BF) ou sur l'unité de moule interchangeable (10).

10. Dispositif selon la revendication 8 ou 9, dans lequel le moule de formage (4) comprend un entraînement de transport (13, 16, 19) pour un moyen de transport (11), lesquels sont structurellement intégrés dans l'unité de moule interchangeable (10) et sont agencés pour la détection et le mouvement des cordons de pâte, **caractérisé en ce qu'**un élément de soutien et un élément de retenue (20, 21, 22) forment ensemble un accouplement d'entraînement (15) pour le moyen de transport (11), dans lequel un élément de soutien (15) comprend un boulon de mise en prise (22) actionnable manuellement et traversant une paroi du cadre de base, auquel boulon est associée une paroi de soutien (28) à retenue de l'unité de moule interchangeable (10) avec un contre moule complémentaire pour un engagement opposé non-positif et/ou positif.

11. Dispositif selon la revendication 10, **caractérisé en ce que** le boulon de mise en prise (22) est monté de manière coulissante dans la paroi à l'encontre d'un moyen élastique (25) et comprend pour son actionnement manuel une poignée (29) qui fait saillie sur le côté extérieur du châssis de base.

12. Dispositif selon l'une quelconque des revendications précédentes, **caractérisé par** des moyens de coupe (5) de cordon de pâte en tant que composant fonctionnel (FC) ou en tant que l'un des composants fonctionnels, lesquels moyens de coupe (5) comprennent une unité d'entraînement (40) rapportée sur le cadre de base (BF) associé et un outil de coupe interchangeable (41) pouvant être connecté à celle-ci par des moyens de couplage (44, 53, 58, 59) manuel détachables.

13. Dispositif selon la revendication 12, **caractérisé en ce que** les moyens de couplage (44, 53, 58, 59) comprennent un arbre de sortie (47) faisant saillie de l'unité d'entraînement (40) ainsi qu'un arbre d'entrée (48) faisant saillie de l'outil de coupe interchangeable, les extrémités desdits arbres étant agencées de façon complémentaire pour un accouplement de forme.

14. Dispositif selon la revendication 12 ou 13, **caractérisé en ce que** les moyens de couplage (44, 53, 58, 59) comprennent un arbre de sortie (47) faisant saillie de l'unité d'entraînement (40) ainsi qu'un arbre d'entrée (48) faisant saillie de l'outil de coupe interchangeable (41), les extrémités desdits arbres étant munies de broches ou de boulons de positionnement (53, 57) centrés ou excentrés et d'évidements (58) complémentaires correspondants.

15. Dispositif selon la revendication 13 ou 14, dans lequel l'outil de coupe interchangeable (41) est muni d'une ou plusieurs unités d'entraînement séparées, par exemple des moyens de préhension (43), **caractérisé en ce que** les moyens de couplage (44, 53, 58, 59) comprennent un guide rotatif (59) pour la transition depuis l'arbre de sortie jusqu'à l'arbre d'entrée (47, 48), en particulier un guide rotatif (59) structurellement intégré à l'intérieur de l'arbre de sortie et/ou de l'arbre d'entrée (47, 48).
